# EUROPÄISCHE PATENTSCHRIFT

(11) **EP 1 716 329 B1**
(45) Veröffentlichungstag und Bekanntmachung des Hinweises auf die Patenterteilung: **28.04.2010**
(21) Anmeldenummer: 05707102.9
(22) Anmeldetag: 01.02.2005
(51) Int. Cl.: F02D 41/02

(54) **VERFAHREN ZUR MOTORSTEUERUNG EINES KRAFTFAHRZEUGS MIT HANDSCHALTGETRIEBE**
METHOD FOR CONTROLLING THE ENGINE OF A MOTOR VEHICLE HAVING A MANUAL TRANSMISSION
PROCEDE DE COMMANDE DE MOTEUR D'AUTOMOBILE A TRANSMISSION MANUELLE

(30) Priorität: 12.02.2004 DE 102004006880
(43) Veröffentlichungstag der Anmeldung: 02.11.2006
(73) Patentinhaber: AUDI AG, 85045 Ingolstadt (DE); ROBERT BOSCH GMBH, 70469 Stuttgart-Feuerbach (DE)
(72) Erfinder: MEYER, Herbert, 93155 Regensburg (DE); VOGT, Bernhard, 71032 Böblingen (DE); MUHLER, Michael, 70825 Münchingen (DE); GEYWITZ, Georg, 74930 Ittlingen (DE)
(74) Vertreter: Mader, Wilfried
(86) Internationale Anmeldenummer: PCT/EP2005/000954
(87) Internationale Veröffentlichungsnummer: WO 2005/078261

(56) Entgegenhaltungen:
- FR-A- 2 785 238
- FR-A- 2 837 256
- FR-A- 2 837 432
- US-A- 6 033 342
- US-A- 6 041 276
- US-B1- 6 258 008

## Beschreibung

Die Erfindung betrifft ein Verfahren zur Motorsteuerung eines Kraftfahrzeugs mit Handschaltgetriebe.
Ein derartiges Verfahren ist aus der US-A-6 033 342 bekannt.

Bei Kraftfahrzeugen mit Handschaltgetriebe ist zur Unterbrechung des Kraftflusses zwischen dem Motor und dem Getriebe des Kraftfahrzeugs während des durch manuelle Betätigung des Handschaltgetriebes erfolgenden Schaltvorgangs eine vom Fahrer des Kraftfahrzeugs üblicherweise über ein Fußpedal zu betätigende mechanische Kupplung vorgesehen. Bei hohen Motordrehzahlen im Leerlauf und bei einem mit hohen Motordrehzahlen erfolgenden Anfahrvorgang (bsp. bei einem Rennstart mit schleifender Kupplung) wird durch den großen Drehzahlunterschied zwischen Motor und Getriebe eine sehr hohe Reibarbeit auf die Kupplung übertragen. Dies führt zu einer starken thermischen Belastung der Kupplung, was einen vorzeitigen Kupplungsverschleiß insbesondere bei drehmoment- und anzugsstarken, hochdrehenden Motoren mit Vierradantrieb zur Folge hat.
Bei der gattungsgemäßen US-A-6 033 342 ist eine Antriebsanordnung für ein von einem Verbrennungsmotor angetriebenes Kraftfahrzeug mit einer Schlupfregelung bekannt, bei der das durch die Stellung des Fahrpedals vorgegebenen Motormoments in Abhängigkeit definierter Motorparameter zeitlich begrenzt reduziert wird.
In der US-B1-6 258 008 ist ein Verfahren zum Schutz von Kupplungen beschrieben, bei dem das Motordrehmoment in Abhängigkeit der Motordrehzahl reduziert wird, wobei als Motorkenngrößen zur Vorgabe des Motordrehmoments die Motordrehzahl oder die Änderungsrate der Motordrehzahl herangezogen werden können.

Der Erfindung liegt die Aufgabe zugrunde, ein Verfahren zur Motorsteuerung eines Kraftfahrzeugs mit Handschaltgetriebe gemäß dem Oberbegriff des Patentanspruchs 1 anzugeben, bei dem auf einfache Weise nachteilige Auswirkungen auf die Kupplung, insbesondere beim Anfahrvorgang und im Leerlauf des Kraftfahrzeugs, vermieden werden.
Diese Aufgabe wird erfindungsgemäß durch die Merkmale im Kennzeichen des Patentanspruchs 1 gelöst.
Vorteilhafte Ausgestaltungen der Erfindung sind Bestandteil der weiteren Patentansprüche.

Erfindungsgemäß wird bei einem Kraftfahrzeug mit Handschaltgetriebe, bei dem keine Mittel zur direkten Bestimmung des eingelegten Gangs vorgesehen sind, eine Reduzierung des vom Fahrer durch die Betätigung des Fahrpedals angeforderten Soll-Motordrehmoments insbesondere zur Begrenzung der Motordrehzahl zugelassen, solange mindestens ein vorgebbares (applizierbares) Zulassungskriterium für den Fahrzustand des Kraftfahrzeugs erfüllt ist. Hierbei wird zumindest ein von der Fahrgeschwindigkeit des Kraftfahrzeugs abhängiges Zulassungskriterium herangezogen, insbesondere das Unterschreiten eines vorgebbaren applizierbaren Geschwindigkeitsschwellwerts durch die Fahrgeschwindigkeit des Kraftfahrzeugs; als Geschwindigkeitsschwellwert für die Fahrgeschwindigkeit des Kraftfahrzeugs wird hierbei vorzugsweise ein Wert im Bereich von 30 km/h bis 40 km/h oder ein Wert unterhalb von 40 km/h vorgegeben, bsp. ein Wert von ca. 35 km/h. Demzufolge wird bei der Fahrgeschwindigkeit Null des Kraftfahrzeugs (im Leerlauf des Kraftfahrzeugs) oder bei einer gegenüber dem Geschwindigkeitsschwellwert geringeren Fahrgeschwindigkeit des Kraftfahrzeugs (beim Anfahrvorgang des Kraftfahrzeugs) anstelle des vom Fahrer durch die Betätigung des Fahrpedals angeforderten Soll-Motordrehmoments insbesondere zur Begrenzung der Motordrehzahl ein Vorgabe-Motordrehmoment ermittelt, das unter bestimmten Voraussetzungen gegenüber dem Soll-Motordrehmoment reduziert ist. Optional kann als weiteres Zulassungskriterium (insbesondere beim Anfahrvorgang des Kraftfahrzeugs) eine applizierbare Verzögerungszeit herangezogen werden, d.h. eine mögliche Reduzierung des vom Fahrer durch die Betätigung des Fahrpedals angeforderten Soll-Motordrehmoments und damit die Vorgabe eines ggf. hiervon abweichenden Vorgabe-Motordrehmoments wird erst nach Ablauf einer bestimmten Zeitspanne nach dem Erkennen des Anfahrvorgangs des Kraftfahrzeugs zugelassen. Diese Verzögerungszeit (bsp. 500 ms) kann insbesondere bei Kraftfahrzeugen mit langsamem Aufbau der Motorleistung bzw. des Motordrehmoments als Zulassungskriterium herangezogen werden, bsp. bei Kraftfahrzeugen mit Turboladern, bei denen ein langsamer Aufbau des Ladedrucks erfolgt.
Das Vorgabe-Motordrehmoment wird hierbei in Abhängigkeit mindestens einer Motorkenngröße ermittelt, vorzugsweise werden die Motordrehzahl einerseits und der Quotient aus Motordrehzahl und Fahrgeschwindigkeit des Kraftfahrzeugs andererseits als Motorkenngrößen herangezogen. Zur Generierung des Vorgabe-Motordrehmoments wird das Soll-Motordrehmoment mit einem Momentenfaktor beaufschlagt, dem Werte im Wertebereich von 0 bis 1 zugeordnet werden; das Vorgabe-Motordrehmoment weicht somit insbesondere dann vom Soll-Motordrehmoment ab und ist gegenüber dem Soll-Motordrehmoment reduziert, wenn der Momentenfaktor den Wert 1 unterschreitet; dies ist vorzugsweise dann der Fall, wenn die Motordrehzahl des Kraftfahrzeugs einen vorgebbaren Drehzahlschwellwert übersteigt (bsp. wird als Drehzahlschwellwert ein Wert von 4600 U/min vorgegeben) und wenn der Quotient aus Motordrehzahl und Fahrgeschwindigkeit des Kraftfahrzeugs innerhalb eines vorgebbaren Wertebereichs (bsp. zwischen 100 min⁻¹/km/h und 500 min⁻¹/km/h) liegt. Der Momentenfaktor kann hierbei aus einem Kennfeld ermittelt werden, in dem die verwendeten Motorkenngrößen, vorzugsweise die Motordrehzahl und der Quotient aus Motordrehzahl und Fahrgeschwindigkeit des Kraftfahrzeugs, abgebildet sind. Ein gegenüber dem Soll-Motordrehmoment reduziertes Vorgabe-Motordrehmoment (bei einem den Wert 1 unterschreitenden Momentenfaktor) wird in üblicher Weise durch einen auf das Motordrehmoment einwirkenden Eingriff realisiert, insbesondere durch einen Eingriff auf die Drosselklappe und/oder die Zündung und/oder die Kraftstoffeinspritzung des Kraftfahrzeugs.

Vorteilhafterweise kann mit dem vorgestellten Verfahren ohne das Erfordernis einer expliziten Gangerkennung des eingelegten Gangs, eine signifikante Reduzierung der Beanspruchung der Kupplung und damit eine Vermeidung von Überlastungen der Kupplung durch eine Begrenzung des Motordrehmoments und demzufolge der Motordrehzahl sowohl im Leerlauf des Kraftfahrzeugs als auch beim Anfahrvorgang des Kraftfahrzeugs gewährleistet werden. Bei sportlichen Anfahrmanövern, insbesondere im Falle des Anfahrens mit hoher Drehzahl und Last, werden aufgrund der gleichförmigen Beeinflussung des Vorgabe-Motordrehmoments infolge der vorzugsweise verwendeten Motorkenngrößen Motordrehzahl und Fahrgeschwindigkeit und infolge der Vermeidung von Sprüngen der Drehmomentbegrenzung beim Erkennen und Wechseln der Gänge nachteilige Auswirkungen auf Agilität, Beschleunigungsverhalten oder Fahrkomfort des Kraftfahrzeugs vermieden. Im Leerlauf des Kraftfahrzeugs kann die Begrenzung des Motordrehmoments und demzufolge der Motordrehzahl für akustische Zwecke genutzt werden.

Im Zusammenhang mit der Zeichnung soll ein Ausführungsbeispiel der Erfindung erläutert werden.
Hierbei zeigt:
- Figur 1: ein Prinzipschaltbild der Drehmomentsteuerung,
- Figur 2: den zeitlichen Verlauf der Stellung von Fahrpedal und Drosselklappe beim Anfahrvorgang,
- Figur 3: den zeitlichen Verlauf verschiedener Motorkenngrößen beim Anfahrvorgang.

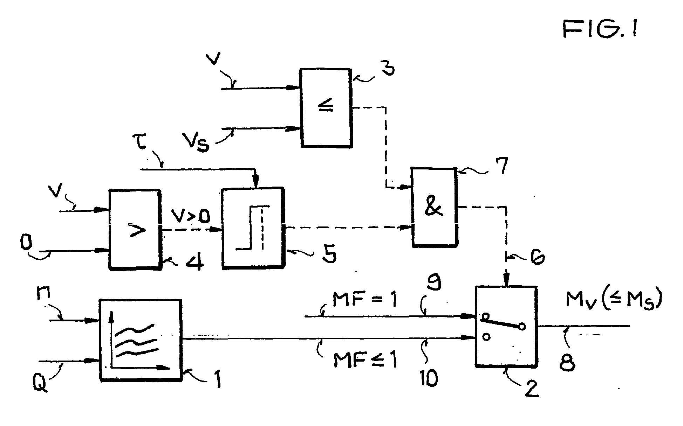

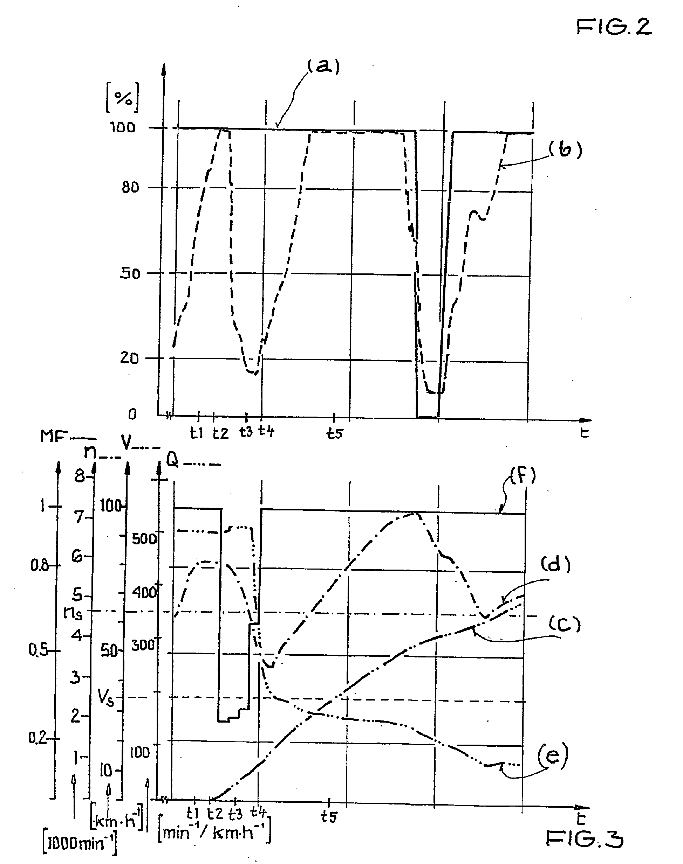

In der Figur 1 ist das Prinzipschaltbild einer den Anfahrvorgang eines Kraftfahrzeugs mit Handschaltgetriebe beeinflussenden Motorsteuerung dargestellt.
Eine Beeinflussung des vom Fahrer des Kraftfahrzeugs durch die Betätigung des Fahrpedals (siehe Figur 2) angeforderten Soll-Motordrehmoments M_{S} und damit die Vorgabe eines ggf. hier gegenüber reduzierten Vorgabe-Motordrehmoments M_{V} (M_{V} ≤ M_{S}) wird nur beim Erfüllen mindestens eines Zulassungskriteriums zugelassen. Als zu erfüllendes Zulassungskriterium werden bsp. das Anfahren bzw. Anrollen des Kraftfahrzeugs (Fahrgeschwindigkeit v des Kraftfahrzeugs > 0, was mittels des Komparators 4 überprüft wird), der Ablauf einer Verzögerungszeit τ (die Verzögerungszeit τ von bsp. 500 ms wird durch das Verzögerungsglied 5 eingestellt) und das Unterschreiten eines Geschwindigkeitsschwellwerts v_{S} (Fahrgeschwindigkeit v des Kraftfahrzeugs < Geschwindigkeitsschwellwert v_{S} von bsp. 35 km/h, was mittels des Komparators 3 überprüft wird) herangezogen. Beim Erfüllen aller Zulassungskriterien wird am Ausgang des Logikglieds 7 ein entsprechendes Logiksignal auf der Steuerleitung 6 ausgegeben und das Schaltglied 2 betätigt, das von der Eingangsleitung 9 (Vorgabe eines Vorgabe-Drehmoments M_{V} am Ausgang 8 des Schaltglieds 2 ist gesperrt) auf die Eingangsleitung 10 umschaltet (Vorgabe eines Vorgabe-Drehmoments M_{V} am Ausgang 8 des Schaltglieds 2 ist freigeschaltet). Durch Multiplikation des Soll-Motordrehmoments M_{S} mit dem Momentenfaktor MF (MF ≤ 1) wird ein Vorgabe-Drehmoment M_{V} generiert, das maximal so groß wie das Soll-Motordrehmoment M_{S} ist, unter bestimmten Umständen aber kleiner als das Soll-Motordrehmoment M_{S} ist (keine Reduzierung des Soll-Motordrehmoments M_{S} bei MF = 1; Reduzierung des Soll-Motordrehmoments M_{S} bei MF < 1). Zur Ermittlung des Momentenfaktors MF bei freigeschalteter Eingangsleitung 10 des Schaltglieds 2 werden die beiden Motorkenngrößen Motordrehzahl n einerseits und Quotient Q aus Motordrehzahl n und Fahrgeschwindigkeit v des Kraftfahrzeugs andererseits herangezogen, die als Eingangsgrößen einem Kennfeld 1 zugeführt werden, an dessen Ausgang der Momentenfaktor MF (MF ≤ 1) auf der Eingangsleitung 10 ausgegeben wird. Bsp. ist der Momentenfaktor MF nur dann von 1 verschieden (MF < 1) und bewirkt hierdurch über den Ausgang 8 des Schaltglieds 2 einen Eingriff auf das Soll-Motordrehmoment M_{S} zur Begrenzung der Motordrehzahl n, wenn die Motordrehzahl n einen Drehzahlschwellwert n_{S} übersteigt (bsp. wird als Drehzahlschwellwert n_{S} ein Wert von 4600 min⁻¹ vorgegeben) und der Quotient Q aus Motordrehzahl n und Fahrgeschwindigkeit v des Kraftfahrzeugs innerhalb eines bestimmten Wertebereichs liegt (bsp. wird dieser Wertebereich von 150 min⁻¹/km/h bis 500 min⁻¹/km/h vorgegeben, was in etwa dem Bereich des 1. Gangs eines üblichen Handschaltgetriebes entspricht). Der Eingriff zur Reduzierung des Soll-Motordrehmoments M_{S} auf das Vorgabe-Drehmoment M_{V} bei einem Momentenfaktor MF kleiner als 1 (MF < 1) kann bsp. über die Drosselklappe oder den Einspritzzeitpunkt oder den Zündzeitpunkt erfolgen.

Die Figuren 2 und 3 zeigen den zeitlichen Verlauf bestimmter Motorkenngrößen des Kraftfahrzeugs mit Handschaltgetriebe bei einem Rennstart (Anfahren des Kraftfahrzeugs mit Vollgas und durchgetretener Kupplung). In der Figur 2 ist hierzu der zeitliche Verlauf der durch den Fahrer vorgegebenen Stellung des Fahrpedals (Kurve (a) als Maß für das Soll-Motordrehmoment M_{S}) sowie die Stellung der Drosselklappe (Kurve (b) als Maß für das Vorgabe-Drehmoment M_{V}) dargestellt, in der Figur 3 der zeitliche Verlauf der Fahrgeschwindigkeit v (Kurve (c)), der Motordrehzahl n (Kurve (d)), des Quotienten Q aus Motordrehzahl n und Fahrgeschwindigkeit v (Kurve (e)) und des Momentenfaktors MF (Kurve (f)).
Zum Zeitpunkt t₁ vor dem Anfahren des Kraftfahrzeugs wird bei einem Rennstart das Fahrpedal vollständig durchgetreten (Kurve (a)) und dementsprechend die Drosselklappe vollständig geöffnet (Kurve (b)), gleichzeitig wird das Kupplungspedal durchgetreten. Die Motordrehzahl n (Kurve (d)) steigt auf einen oberhalb des Drehzahlschwellwerts n_{S} von bsp. 4600 min⁻¹ liegenden kritischen Wert von bsp. 5800 min⁻¹ an.
Zum Zeitpunkt t₂ beim Anfahren des Kraftfahrzeugs (Anrollen) wird die Kupplung schlagartig oder allmählich geschlossen, das Fahrpedal (Kurve (a)) bleibt vollständig durchgetreten und die Drosselklappe (Kurve (b)) ist vollständig (zu 100%) geöffnet (Vollgas), wodurch die Fahrgeschwindigkeit v (Kurve (c)) einen von Null verschiedenen Wert annimmt (v > 0). Die Motordrehzahl n (Kurve (d)) bleibt auf einem oberhalb des Drehzahlschwellwerts n_{S} (bsp. 4600 min⁻¹) liegenden Wert. Aufgrund eines hohen Drehzahlunterschieds zwischen Motor und Getriebe des Kraftfahrzeugs kann dies zu thermischer Überlastung der Kupplung und damit zum Verschleiß (Ausfall) der Kupplung führen.
Zum Zeitpunkt t₃ unmittelbar nach dem Anfahren des Kraftfahrzeugs wird jedoch über den Momentenfaktor MF eine Begrenzung des Motordrehmoments M vom Soll-Motordrehmoment M_{S} auf das Vorgabe-Drehmoment M_{V} vorgenommen, da einerseits die Zulassungskriterien für das Vorgabe-Drehmoment M_{V} erfüllt sind (Fahrgeschwindigkeit v > 0 und Fahrgeschwindigkeit v kleiner als der Geschwindigkeitsschwellwert v_{S} von bsp. 35 km/h, eine Verzögerungszeit τ nach dem Zeitpunkt t₂ (Anfahren des Kraftfahrzeugs) wird bsp. nicht vorgegeben (τ = 0) und andererseits aufgrund der Werte der Motorkenngrößen Motordrehzahl n und Quotient Q aus Motordrehzahl n und Fahrgeschwindigkeit v als Eingangsgrößen des Kennfelds 1 (insbesondere übersteigt die Motordrehzahl n den Drehzahlschwellwert n_{S} von 4600 min⁻¹, während der Quotient Q in einem vorgegebenen, für den 1. Gang charakteristischen Wertebereich liegt) vom Kennfeld 1 ein von 1 verschiedener Momentenfaktor MF ausgegeben wird (MF ≤ 1, bsp. beträgt der Minimalwert von MF ca. 0.3). Hierdurch wird die vollständig geöffnete Drosselklappe (Öffnung Drosselklappe 100 %) wieder teilweise geschlossen (Öffnung Drosselklappe < 100 %, bsp. Öffnung Drosselklappe ca. 20 %) und daher ein gegenüber dem Soll-Motordrehmoment M_{S} reduziertes Vorgabe-Drehmoment M_{V} als Motordrehmoment abgegeben, was auch eine Reduzierung der Motordrehzahl n bewirkt, die demzufolge unter den Drehzahlschwellwert n_{S} von 4600 min⁻¹ absinkt.
Zum Zeitpunkt t₄ wird aufgrund der nun geänderten Werte der Motorkenngrößen Motordrehzahl n und Quotient Q aus Motordrehzahl n und Fahrgeschwindigkeit v als Eingangsgrößen des Kennfelds 1 (insbesondere durch die Reduzierung der Motordrehzahl n, die somit den Drehzahlschwellwert n_{S} von 4600 min⁻¹ wieder unterschreitet) vom Kennfeld 1 wieder der Wert 1 für den Momentenfaktor MF ausgegeben (MF = 1), wodurch die Drosselklappe (Kurve (b)) wieder entsprechend der Stellung des Fahrpedals (Kurve (a)) geöffnet wird (Öffnung Drosselklappe auf 100 %) und das dem Soll-Motordrehmoment M_{S} entsprechende Vorgabe-Drehmoment M_{V} als Motordrehmoment abgegeben wird.
Zum Zeitpunkt t₅ wird beim Erreichen des Geschwindigkeitsschwellwerts v_{S} von bsp. 35 km/h für die Fahrgeschwindigkeit v ein Zulassungskriterium für die Vorgabe des Vorgabe-Drehmoments M_{V} nicht mehr erfüllt, so dass ab diesem Zeitpunkt t₅ die Vorgabe des Vorgabe-Drehmoments M_{V} deaktiviert wird. Hierdurch wird das Schaltglied 2 gemäß Figur 1 auf die Eingangsleitung 9 umgeschaltet und auf der Ausgangsleitung 8 des Schaltglieds 2 das durch die Stellung des Fahrpedals angeforderte Soll-Motordrehmoment M_{S} ausgegeben.

## Patentansprüche

1. Verfahren zur Motorsteuerung eines Kraftfahrzeugs mit Handschaltgetriebe,
wobei beim Erfüllen mindestens eines vom Fahrzustand des Kraftfahrzeugs abhängigen Zulassungskriteriums für das Motordrehmoment (M) ein gegenüber dem durch die Stellung des Fahrpedals des Kraftfahrzeugs angeforderten Soll-Motordrehmoment (M_{S}) reduzierbares Vorgabe-Motordrehmoment (M_{V}) vorgegeben wird,
**dadurch gekennzeichnet,**
**dass** als vom Fahrzustand des Kraftfahrzeugs abhängiges Zulassungskriterium die Fahrgeschwindigkeit (v) des Kraftfahrzeugs herangezogen wird,
und **dass** das Vorgabe-Motordrehmoment (M_{V}) beim Erkennen eines Anfahrvorgangs des Kraftfahrzeugs und beim Unterschreiten eines Geschwindigkeitsschwellwerts (v_{S}) für die Fahrgeschwindigkeit (v) des Kraftfahrzeugs in Abhängigkeit mindestens einer Motorkenngröße (n, Q) vorgegeben wird.

2. Verfahren nach Anspruch 1, **dadurch gekennzeichnet, dass** als zusätzliches vom Fahrzustand des Kraftfahrzeugs abhängiges Zulassungskriterium eine bestimmte Verzögerungszeit (τ) nach dem Erkennen des Anfahrvorgangs des Kraftfahrzeugs herangezogen wird, und dass das Vorgabe-Motordrehmoment (M_{V}) nach Ablauf der Verzögerungszeit (τ) in Abhängigkeit mindestens einer Motorkenngröße (n, Q) vorgegeben wird.

3. Verfahren nach einem der Ansprüche 1 bis 2, **dadurch gekennzeichnet, dass** das Vorgabe-Motordrehmoment (M_{V}) in Abhängigkeit zumindest der Motorkenngrößen Motordrehzahl (n) und Quotient (Q) aus Motordrehzahl (n) und Fahrgeschwindigkeit (v) des Kraftfahrzeugs vorgegeben wird.

4. Verfahren nach Anspruch 3, **dadurch gekennzeichnet, dass** das eine Drehzahlbegrenzung der Motordrehzahl (n) bewirkende Vorgabe-Motordrehmoment (M_{V}) gegenüber dem Soll-Motordrehmoment (M_{S}) reduziert wird, wenn die Motordrehzahl (n) einen Drehzahlschwellwert (n_{S}) übersteigt und der Quotient (Q) aus Motordrehzahl (n) und Fahrgeschwindigkeit (v) des Kraftfahrzeugs innerhalb eines bestimmten Wertebereichs liegt.

5. Verfahren nach Anspruch 4, **dadurch gekennzeichnet, dass** als Drehzahlschwellwert (n_{S}) für die Motordrehzahl (n) ein Wert von 4600 U/min vorgegeben wird.

6. Verfahren nach einem der Ansprüche 1 bis 5, **dadurch gekennzeichnet, dass** das Vorgabe-Motordrehmoment (M_{V}) durch Beaufschlagung des Soll-Motordrehmoments (M_{S}) mit einem Momentenfaktor (MF) bestimmt wird.

7. Verfahren nach Anspruch 6, **dadurch gekennzeichnet, dass** der Momentenfaktor (MF) aus einem Kennfeld (1) ermittelt wird.

8. Verfahren nach einem der Ansprüche 1 bis 7, **dadurch gekennzeichnet, dass** bei einer Abweichung des Vorgabe-Motordrehmoments (M_{V}) vom Soll-Motordrehmoment (M_{S}) ein Eingriff auf die Drosselklappe und/oder die Zündung und/oder die Kraftstoffeinspritzung des Kraftfahrzeugs vorgenommen wird.

9. Verfahren nach einem der Ansprüche 2 bis 8, **dadurch gekennzeichnet, dass** als Geschwindigkeitsschwellwert (v_{S}) für die Fahrgeschwindigkeit (v) des Kraftfahrzeugs ein Wert im Bereich von 25 km/h bis 40 km/h vorgegeben wird.

10. Verfahren nach Anspruch 9, **dadurch gekennzeichnet, dass** als Geschwindigkeitsschwellwert (v_{S}) für die Fahrgeschwindigkeit (v) des Kraftfahrzeugs ein Wert von 35 km/h vorgegeben wird.

11. Verfahren nach einem der Ansprüche 1 bis 10, **dadurch gekennzeichnet, dass** das Vorgabe-Motordrehmoment (M_{V}) im Leerlauf des Kraftfahrzeugs zur akustischen Beeinflussung des Motorgeräuschs vorgegeben wird.

12. Verfahren nach einem der Ansprüche 1 bis 12, **dadurch gekennzeichnet, dass** das Vorgabe-Motordrehmoment (M_{V}) beim Anfahrvorgang des Kraftfahrzeugs zur Vermeidung von Kupplungsschäden an der Kupplung des Kraftfahrzeugs vorgegeben wird.

## Claims

1. Method for controlling the engine of a motor vehicle having a manual transmission, in which, in the fulfilment of at least one authorization criterion, dependent on the driving state of the motor vehicle, for the engine torque (M), a stipulated engine torque (Mᵥ) capable of being reduced with respect to the desired engine torque (Mₛ) demanded by the position of the accelerator pedal of the motor vehicle is stipulated,
**characterized**
**in that** the driving speed (v) of the motor vehicle is used as the authorization criterion dependent on the driving state of the motor vehicle,
and **in that** the stipulated engine torque (Mᵥ) is stipulated as a function of at least one engine characteristic quantity (n, Q) when an operation to start the motor vehicle is detected and when a speed threshold value (vₛ) for the driving speed (v) of the motor vehicle is undershot.

2. Method according to Claim 1, **characterized in that** a specific delay time (τ) after the detection of the operation to start the motor vehicle is used as an additional authorization criterion dependent on the driving state of the motor vehicle, and **in that** the stipulated engine torque (Mᵥ) is stipulated as a function of at least one engine characteristic quantity (n, Q) after the expiry of the delay time (τ).

3. Method according to either one of Claims 1 and 2, **characterized in that** the stipulated engine torque (Mᵥ) is stipulated as a function of at least the engine characteristic quantities comprising the engine rotational speed (n) and the quotient (Q) of the engine rotational speed (n) and driving speed (v) of the motor vehicle.

4. Method according to Claim 3, **characterized in that** the stipulated engine torque (Mᵥ) causing a limitation of the engine rotational speed (n) is reduced with respect to the desired engine torque (Mₛ) when the engine rotational speed (n) overshoots a rotational-speed threshold value (nₛ) and the quotient (Q) of the engine rotational speed (n) and driving speed (v) of the motor vehicle lies within a specific value range.

5. Method according to Claim 4, **characterized in that** a value of 4600 rev/min is stipulated as a rotational-speed threshold value (nₛ) for the engine rotational speed (n).

6. Method according to one of Claims 1 to 5, **characterized in that** the stipulated engine torque (Mᵥ) is determined by the action of a torque factor (MF) upon the desired engine torque (Mₛ).

7. Method according to Claim 6, **characterized in that** the torque factor (MF) is determined from a characteristic map (1).

8. Method according to one of Claims 1 to 7, **characterized in that**, in the event of a deviation of the stipulated engine torque (Mᵥ) from the desired engine torque (Mₛ), an intervention upon the throttle valve and/or the ignition and/or the fuel injection of the motor vehicle is carried out.

9. Method according to one of Claims 2 to 8, **characterized in that** a value in the range of 25 km/h to 40 km/h is stipulated as a speed threshold value (vₛ) for the driving speed (v) of the motor vehicle.

10. Method according to Claim 9, **characterized in that** a value of 35 km/h is stipulated as a speed threshold value (vₛ) for the driving speed (v) of the motor vehicle.

11. Method according to one of Claims 1 to 10, **characterized in that** the stipulated engine torque (Mᵥ) is stipulated during the idling of the motor vehicle for the purpose of exerting acoustic influence upon the engine noise.

12. Method according to one of Claims 1 to 12, **characterized in that** the stipulated engine torque (Mᵥ) is stipulated during the operation to start the motor vehicle for the purpose of avoiding clutch damage to the clutch of the motor vehicle.

## Revendications

1. Procédé de commande de moteur d'un véhicule automobile à transmission manuelle,
dans lequel, si au moins un critère d'autorisation pour le couple moteur (M), dépendant de l'état de conduite du véhicule automobile, est satisfait, un couple moteur préalable (Mᵥ) pouvant être réduit par rapport au couple moteur de consigne (Mₛ) demandé par la position de la pédale d'accélérateur du véhicule automobile est prédéfini,
**caractérisé en ce que**
l'on utilise comme critère d'autorisation dépendant de l'état de conduite du véhicule automobile la vitesse de conduite (v) du véhicule automobile,
et **en ce que** le couple moteur préalable (Mᵥ) est prédéfini, une fois que l'on a reconnu une opération de démarrage du véhicule automobile et en dessous d'une valeur seuil de vitesse (vₛ) pour la vitesse de conduite (v) du véhicule automobile, en fonction d'au moins une grandeur caractéristique du moteur (n, Q).

2. Procédé selon la revendication 1, **caractérisé en ce que** l'on utilise comme critère d'autorisation supplémentaire dépendant de l'état de conduite du véhicule automobile un temps de ralentissement déterminé (τ) après que l'on a reconnu l'opération de démarrage du véhicule automobile, et **en ce que** le couple moteur préalable (Mᵥ) est prédéfini après le déroulement du temps de ralentissement (τ) en fonction d'au moins une grandeur caractéristique du moteur (n, Q).

3. Procédé selon l'une quelconque des revendications 1 à 2, **caractérisé en ce que** le couple moteur préalable (Mᵥ) est prédéfini en fonction d'au moins les grandeurs caractéristiques du moteur qui sont le régime du moteur (n) et le quotient (Q) du régime du moteur (n) et de la vitesse de conduite (v) du véhicule automobile.

4. Procédé selon la revendication 3, **caractérisé en ce que** le couple moteur préalable (Mᵥ) provoquant une limitation de régime du régime du moteur (n) est réduit par rapport au couple moteur de consigne (Mₛ) si le régime du moteur (n) dépasse une valeur seuil de régime (nₛ) et que le quotient (Q) du régime du moteur (n) et de la vitesse de conduite (v) du véhicule automobile se situe à l'intérieur d'une plage de valeurs prédéterminée.

5. Procédé selon la revendication 4, **caractérisé en ce que** l'on prédéfinit comme valeur seuil de régime (nₛ) pour le régime du moteur (n) une valeur de 4600 tr/min.

6. Procédé selon l'une quelconque des revendications 1 à 5, **caractérisé en ce que** le couple moteur préalable (Mᵥ) est déterminé en affectant le couple moteur de consigne (Mₛ) d'un facteur de couple (MF).

7. Procédé selon la revendication 6, **caractérisé en ce que** le facteur de couple (MF) est déterminé à partir d'un champ caractéristique (1).

8. Procédé selon l'une quelconque des revendications 1 à 7, **caractérisé en ce que** dans le cas d'un écart entre le couple moteur préalable (Mᵥ) et le couple moteur de consigne (Mₛ), on effectue une intervention sur le papillon d'étranglement et/ou sur l'allumage et/ou sur l'injection de carburant du véhicule automobile.

9. Procédé selon l'une quelconque des revendications 2 à 8, **caractérisé en ce que** l'on prédéfinit comme valeur seuil de vitesse (vₛ) pour la vitesse de conduite (v) du véhicule automobile une valeur de l'ordre de 25 km/h à 40 km/h.

10. Procédé selon la revendication 9, **caractérisé en ce que** l'on prédéfinit comme valeur seuil de vitesse (vₛ) pour la vitesse de conduite (v) du véhicule automobile une valeur de 35 km/h.

11. Procédé selon l'une quelconque des revendications 1 à 10, **caractérisé en ce que** le couple moteur préalable (Mᵥ) est prédéfini en marche à vide du véhicule automobile pour influencer acoustiquement le bruit du moteur.

12. Procédé selon l'une quelconque des revendications 1 à 12, **caractérisé en ce que** le couple moteur préalable (Mᵥ), dans le cas d'une opération de démarrage du véhicule automobile, est prédéfini pour éviter des endommagements de l'embrayage au niveau de l'embrayage du véhicule automobile.
